# EUROPÄISCHE PATENTSCHRIFT

(11) **EP 0 639 882 B1**
(45) Veröffentlichungstag und Bekanntmachung des Hinweises auf die Patenterteilung: **12.03.1997**
(21) Anmeldenummer: 94111520.6
(22) Anmeldetag: 23.07.1994
(51) Int. Cl.: H02K 3/48, H02K 3/487, H02K 15/00

(54) **Nutverschlussanordnung**
Slot closing assembly
Dispositif de fermeture d'encoche

(30) Priorität: 18.08.1993 DE 4327775
(43) Veröffentlichungstag der Anmeldung: 22.02.1995
(73) Patentinhaber: ASEA BROWN BOVERI AG, 5401 Baden (CH)
(72) Erfinder: Meier, Walter, CH-5622 Waltenschwil (CH)

(56) Entgegenhaltungen:
- CH-A- 580 351
- FR-A- 2 075 360
- GB-A- 224 525
- US-A- 3 594 597
- US-A- 3 665 576
- US-A- 3 976 901
- PATENT ABSTRACTS OF JAPAN vol. 8, no. 91 (E-241) (1528) 26. April 1984 & JP-A-59 010 147

## Beschreibung

### TECHNISCHES GEBIET

Die Erfindung bezieht sich auf eine Anordnung zum Verschliessen der Nuten des Statorblechkörpers einer elektrischen Maschine gemäss dem einleitenden Teils des Patentanspruchs 1.

Eine Nutverschlussanordnung dieser Art ist beispielsweise aus der CH-A-525 581 bekannt.

### TECHNOLOGISCHER HINTERGRUND UND STAND DER TECHNIK

Auf die in den Nuten elektrischer Maschinen angeordneten Leiterstäbe und Spulen wirken unter der Wechselwirkung des die Leiter durchfliessenden elektrischen Stromes und des magnetischen Feldes im Luftspalt Kräfte wechselnder Richtung ein. Es ist daher notwendig, diese Leiter in den Nuten spielfrei festzulegen. Dies erfolgt in der Regel durch Verkeilung unter mechanischer Vorspannung.

Bei den meisten bekannten Nutverschlussanordnungen werden die Leiterstäbe oder Spulen durch aufgelegte Ausgleichsstreifen und trapezförmige Keile gegen den Nutengrund gedrückt. Um Setzerscheinungen im Betrieb auszugleichen, werden entweder federnde Zwischenlagen, z.B. eine Wellfeder (DE-A 21 65 727), zwischen Nutkeil und Wicklung vorgesehen, oder der Nutkeil selbst wirkt als federndes Element, wie im Falle der eingangs genannten CH-A-525 581.

Bei der Anordnung nach der CH-A-525 581 werden sogenannte Doppelschrägkeile verwendet. Diese erstrecken sich über zwei oder drei Teilblechkörperlängen und sind deshalb individuell verkeilbar und auch nachspannbar. Aus diesem Grunde werden im Vergleich zur Anordnung nach der DE-A-21 65 72 nur vergleichsweise kleine Federwege benötigt.

Aus der US-A-3 976 901 ist ferner eine Anordnung zum Verschliessen der mit Leiterstäben oder Spulen gefüllten Nuten des Statorblechkörpers einer elektrischen Maschine beschrieben, bei der die Krafteinleitung über Federelemente erfolgt. Die Krafteinleitung erfolgt dabei punktuell über die gesamte Länge des Nutkeil in seinem mittleren Abschnitt mittels Tellerfedern aus Isoliermaterial.

### KURZE DARSTELLUNG DER ERFINDUNG

Ausgehend vom Bekannten liegt der Erfindung die Aufgabe zugrunde, eine Nutverschlussanordnung zu schaffen, die ohne federnde Zwischenlagen auskommt und trotzdem grössere Federwege erlaubt.

Diese Aufgabe wird erfindungsgemäss dadurch gelöst, dass die Krafteinleitung vom Leiterstab oder Spule auf den oberen prismatischen Körper über seine gesamte Länge im wesentlichen nur in seinem mittleren Abschnitt erfolgt.

Der Vorteil der Erfindung ist insbesondere darin zu sehen, dass durch diese andersartige Krafteinleitung nunmehr die Elastizität des oberen prismatischen Körpers quer zu seiner Längsrichtung wesentlich besser ausgenützt werden kann. Damit stehen grössere Federwege in radialer Richtung zur Verfügung, welche wiederum Setzerscheinungen im Wicklungsaufbau besser ausgleichen können. Auf diese Weise werden Wartungsintervalle verlängert und die Verfügbarkeit der Maschine erhöht.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: ein erstes Ausführungsbeispiel der Erfindung mit einem zweiteiligen Nutverschluss, bei dem Krafteinleitung über konvexe und konkave Flächen mit schiedlichen Krümmungsradien erfolgt;
- Fig.2: ein zweites Ausführungsbeispiel der Erfindung mit einem zweiteiligen Nutverschluss, bei dem Krafteinleitung über eine leistenartige Erhebung im mittleren Abschnitt des unteren Körpers erfolgt;
- Fig.3: einen Längsschnitt durch den oberen prismatischen Körper der Verschlussanordnung gemäss Fig.2;
- Fig.4: eine Draufsicht auf den oberen prismatischen Körper der Verschlussanordnung gemäss Fig.2;
- Fig.5: eine Seitenansicht des unteren prismatischen Körpers der Verschlussanordnung gemäss Fig.2;
- Fig.6: eine Abwandlung der in Fig.1 dargestellten Ausführungsform mit einem Zwischenstück zwischen Wicklung und unterem prismatischen Körper, wobei die obere Fläche des Zwischenstücks konvex, die untere Fläche des unteren Körpers konkav gekrümmt ist;
- Fig.7: eine Abwandlung der in Fig2 dargestellten Ausführungsform mit einem Zwischenstück zwischen Wicklung und unterem prismatischen Körper, wobei die obere Fläche des Zwischenstücks eine leistenartige Erhebung aufweist.

### WEGE ZUR AUSFÜHRUNG DER ERFINDUNG

In der Zeichnung ist der obere prismatische Körper - im nachfolgenden Nutkeil 1 genannt - und der untere prismatische Körper - im nachfolgenden Zunge 2 genannt - bezeichnet. Nutkeil 1 und Zunge 2 pressen gemeinsam den mit einer Isolation 3 versehenen Leiterstab 4 gegen den Grund der im Statorblechkörper 5 eingestanzten Nut 6, indem sich der Nutkeil 1 gegen die Ausnehmungen 7 im Statorblechkörper 5 abstützt.

Der Nutkeil 1 besteht aus hochfestem glasfaserverstärktem Kunststoff und ist quer zu seiner Längsrichtung elastisch. Die untere, der Zunge 2 zugewandte Fläche 8 des Nutkeils 1 ist konkav gekrümmt. Ihr Krümmungsradius ist mit r_{K} bezeichnet. Die obere, dem Nutkeil 1 zugewandte Fläche 9 der Zunge 2 ist konvex gekrümmt. Ihr Krümmungsradius ist mit r_{Z} bezeichnet. Der Krümmungsradius r_{K} der unteren Fläche 8 des Nutkeils 1 ist grösser als der Krümmungsradius r_{Z} der oberen Fläche 9 der Zunge 2, und zwar um mindestens 5% grösser.

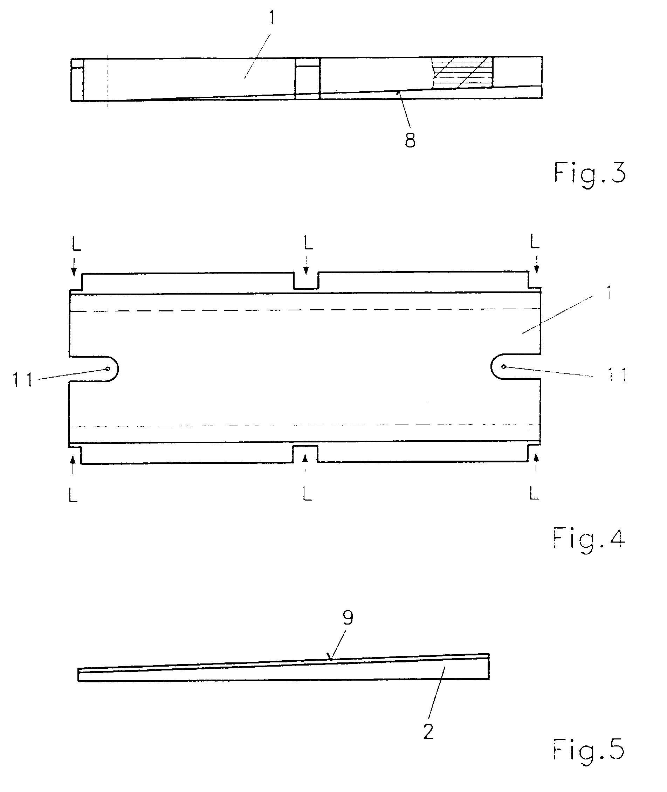

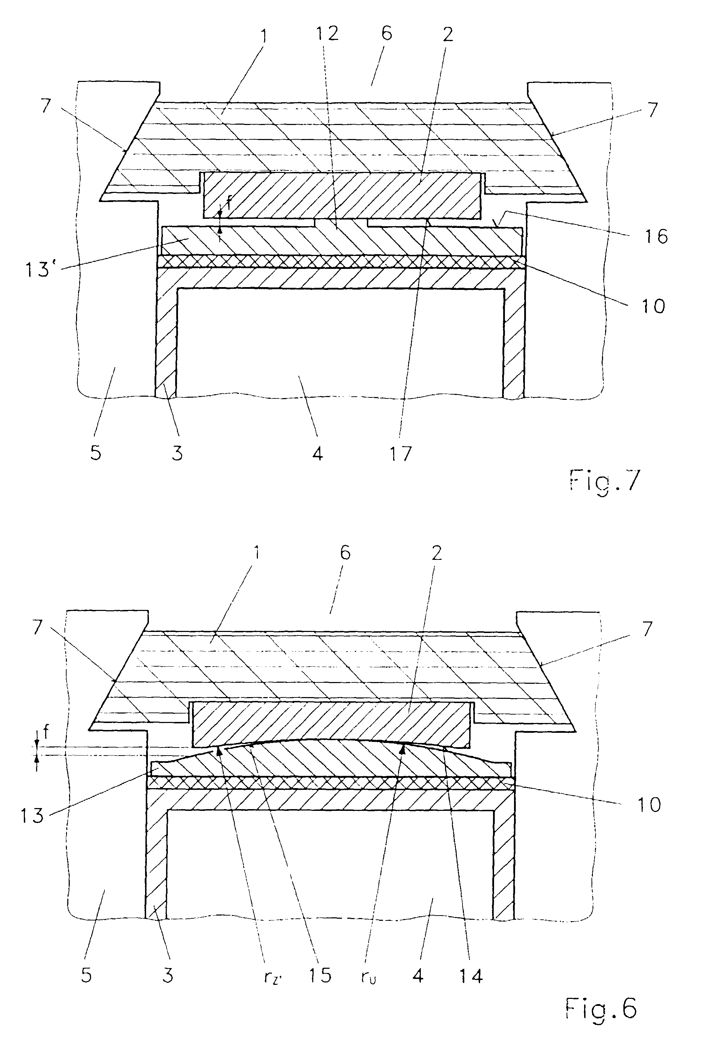

Die konkave Fläche 8 am Nutkeil 1 ist zudem in Keillängsrichtung flach geneigt (Fig.3). Die Fläche 9 an der Zunge 2 weist ebenfalls eine jedoch in entgegengesetzter Richtung verlaufende Neigung gleicher Grösse auf (Fig.5). Nutkeil 1 und Zunge 2 bilden auf diese Weise einen Doppelschrägkeil, so dass beim axialen Eindrücken der Zunge 2 in den Nutkeil 1 ein Druck in radialer Richtung auf den Leiterstab 4 entsteht. Eine Gleitunterlage 10 aus einem Kunstofflaminat schützt dabei die Isolation 3 des Leiterstabes 4 und kann gleichzeitig zum Ausgleich von Fertigungstoleranzen in der radialen Höhe der Leiterstabes 4 dienen.

Die axiale Länge des Nutkeils 1 ist im Beispielsfall so bemessen. dass er einen radialen Lüftungsschlitz im Statorblechkörper überdeckt und etwa in der Mitte der beiden benachbarten Lüftungsschlitze endet. Die Position dieser Lüftungsschlitze ist in Fig.4 durch Pfeile L angedeutet.

Der Nutkeil kann selbstverständlich auch mehrere Lüftungsschlitze überdecken. Axial verlaufende Schlitze 11 in den Stirnseiten des Nutkeils 1 erlauben es, mit einem geeigneten Werkzeug oder Vorrichtung, die Zunge 2 relativ zum Nutkeil zu verschieben.

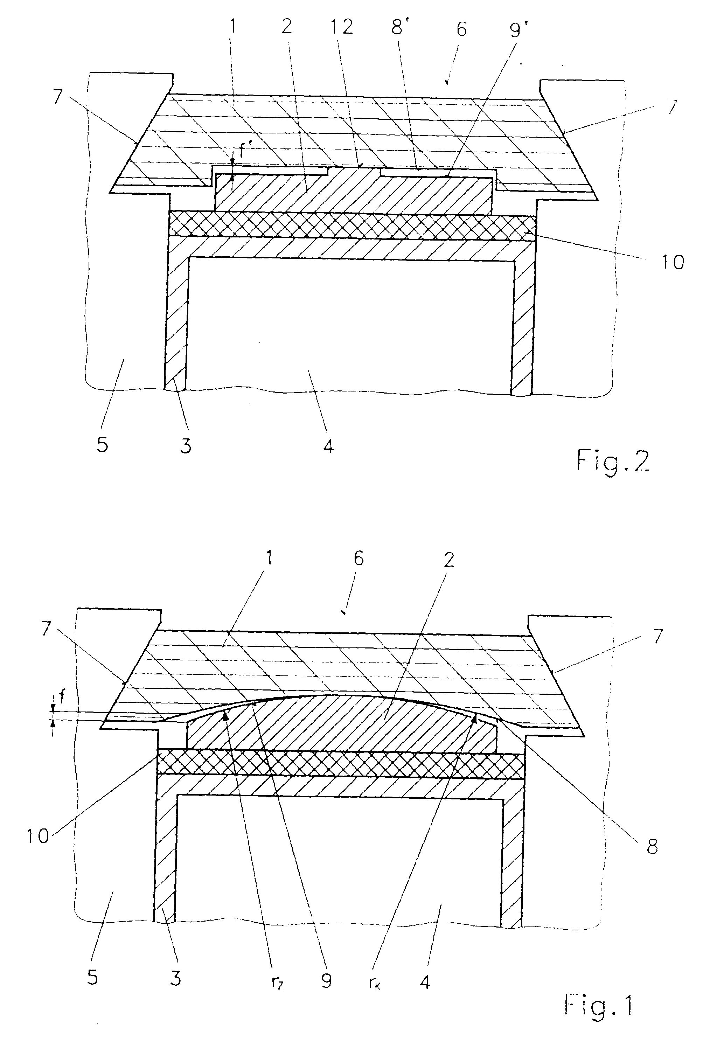

Eine derartige Vorrichtung ist in der CH-A-525 581 beispielsweise beschrieben. Dort wird auch die Montage des im vorstehenden beschriebenen Doppelschrägkeilanordnung in allen wesentlichen Einzelheiten beschrieben. Ergänzend sei darauf hingewiesen, dass vor dem Einpressen der Zungen 2 die Leiterstäbe 4 oder Spulen in der Nut 6 durch Aufheizen und unter Druck vorbehandelt werden. Dies erfolgt in der Regel dadurch, dass die Nut provisorisch verschlossen wird und zwischen provisorischen Nutverschluss und Leiter druckmittelfüllbare Rohre oder Schläuche eingelegt werden. Auf diese Weise setzt sich der Leiterverband in der Nut 6. Spätere durch die eingangs beschriebenen Effekte auftretende Beanspruchungen des Leiterverbandes führen dann - wenn überhaupt - nicht mehr zu gefährlichen Lockerungserscheinungen. Sollten diese trotz allem auftreten, kompensiert der durch die Erfindung ermöglichte grössere radiale Federweg des Nutkeil 1 diese Effekte. Bedingt durch die konkav-konvexe Ausbildung der Berührungsflächen 8 bzw. 9 erfolgt die Krafteinleitung in den Nutkeil 1 nur in seinem mittleren Abschnitt, und es steht ein vergleichsweise grosser Federweg (Mass f in Fig.1) zur Verfügung, bis die beiden Flächen 8 und 9 nahezu vollständig in Berührung kommen.

Fig.2 zeigt eine Abwandlung der Erfindung. Bei dieser Doppelschrägkeilanordnung ist die untere Fläche 8' des Nutkeils 1 eben ausfgeführt. Die Zunge 2 weist mit Ausnahme einer in Zungenlängsrichtung verlaufenden leistenförmigen Erhebung 12 gleichfalls ebene Flächen 9' auf. Die leistenförmige Erhebung 12 ist vorzugsweise einstückig mit der Zunge 2 ausgebildet. Ihre Breite beträgt etwa 20% der Breite der Nut 6, typisch zwischen 10 und 15 mm bei einer Nutbreite von 40 bis 75 mm.

Die Höhe der leistenförmigen Erhebung 12 richtet sich nach dem vorgesehenen maximalen Federweg f' und liegt bei 1 bis 2 mm. Ansonsten entspricht Aufbau und Montage des Doppelschrägkeils gemäss Fig.2 demjenigen der Anordnung nach Fig.1.

Alternativ kann auch die leistenartige Erhebung 12 an der der Zunge 2 zugewandten Fläche 8 des Nutkeils 1 ausgebildet und vorzugsweise einstückig mit diesem ausgeführt sein. Die dem Nutkeil 1 zugewandte Fläche 9 der Zunge 2 ist dann eben ausgeführt. Diese Variante ist in der Zeichnung nicht ausdrücklich dargestellt.

Die in den Figuren 6 und 7 dargestellten Varianten der Erfindung haben als gemeinsames Merkmal Zwischenstücke 13 und 13', welche in Verbindung mit der Zunge 2 den Federweg f (wenn auch in geringerem Mass als bei den Varianten nach Fig.1 und 2) erhöhen.

In der Anordnung nach Fig.6 ist die dem Leitstab 4 zugewandte untere Fläche 14 der Zunge konkav mit einem Krümmungsradius r_{Z}' ausgeführt, während die der Zunge 2 zugewandte obere Fläche 15 des Zwischenstücks 13 konvex mit einem Krümmungsradius r_{U} gekrümmt ist. Analog zu Fig.1 ist der Krümmungsradius r_{Z}' grösser als der Krümmungsradius r_{U}. Weil hier das Zwischenstück 13 die Funktion der Gleitunterlage 10 ganz oder teilweise übernehmen kann, kann diese dünner ausgeführt werden oder ganz entfallen, so dass die Nut 6 nicht tiefer gemacht werden muss.

In der Anordnung nach Fig.7 weist das Zwischenstück 13 auf seiner der Zunge 2 zugewandten Fläche 16 eine leistenförmige Erhebung 12 auf, während die untere, dem Zwischenstück 13' zugewandte Fläche 17 der Zunge 2 eben ist. Auch hier kann analog Fig.6 das Zwischenstück 13' die Funktion der Gleitunterlage 10 ganz oder teilweise übernehmen, so dass diese dünner ausgeführt werden oder ganz entfallen kann, so dass die Nut 6 nicht tiefer gemacht werden muss. Diese Ausführungsform eignet sich insbesondere für Retrofit-Zwecke, weil der eigentliche Doppelschrägkeil unverändert beibehalten werden kann.

Selbstverständlich kann auch bei einer Anordnung nach Fig.7 die leistenförmige Erhebung 12 an der unteren Fläche 17 der Zunge 2 ausgebildet sein, während die obere Fläche 16 des Zwischenstücks eben ist.

Bei den Varianten nach Fig.6 und 7 ist zu vermerken, dass die radiale Elastizität des Nutkeils 1 kleiner ist als bei den Varianten ohne Zwischenlage 13 bzw. 13', weil sich hier die Querelastizität der Zunge zu derjenigen des Nutkeils addiert.

### BEZEICHNUNGSLISTE

- 1: Nutkeil
- 2: Zunge
- 3: Isolation
- 4: Leiterstab
- 5: Statorblechkörper
- 6: Nut in 5
- 7: Ausnehmung in 5
- 8: konkave Fläche von 1
- 8': ebene Fläche von 1
- 9: konvexe Fläche von 2
- 9': ebene Fläche von 2
- 10: Gleitunterlage
- 11: axialer Schlitz in 1
- 12: Leiste
- 13,13': Zwischenstücke
- 14: konkave Fläche an 2
- 15: konvexe Fläche an 13
- 16: obere Fläche von 13'
- 17: untere Fläche von 2
- f,f': Federwege
- L: Position der Lüftungsschlitze
- r_{K}: Krümmungsradius von 8
- r_{Z}: Krümmungsradius von 9
- r_{Z}': Krümmungsradius von 14
- r_{U}: Krümmungsradius von 15

## Patentansprüche

1. Anordnung zum Verschliessen der mit Leiterstäben (4) oder Spulen gefüllten Nuten (6) des Statorblechkörpers (5) einer elektrischen Maschine mittels Nutenverschlussstücken, die jeweils aus wenigstens einem oberen prismatischen Körper (1) an dessen Unterseite eine Fläche geneigt verläuft, und einem unteren prismatischen Körper (2) bestehen, dessen obere, dem oberen Körper (1) zugewandte Fläche gegenüber der Steigung der unteren Fläche des oberen Körpers in entgegengesetzter Richtung geneigt verläuft, wobei die eigentliche Verkeilung durch relative Verschiebung der beiden prismatischen Körper (1, 2) gegeneinander herstellbar ist, dadurch gekennzeichnet, dass die Krafteinleitung vom Leiterstab (4) oder Spule auf den oberen prismatischen Körper (1) über seine gesamte Länge im wesentlichen nur in seinem mittleren Abschnitt erfolgt.

2. Anordnung nach Anspruch 1 dadurch gekennzeichnet, dass die besagte untere Fläche (8) im oberen prismatischen Körper (1) konkav gekrümmt und dass die besagte obere Fläche (9) im unteren prismatischen Körper (2) Konvex gekrümmt ist, wobei der Krümmungsradius (r_{K}) der unteren Fläche (8) grösser ist als der Krümmungsradius (r_{Z}) der oberen Fläche(9).

3. Anordnung nach Anspruch 2, dadurch gekennzeichnet, dass der Krümmungsradius (r_{K}) der unteren Fläche (8) um mindestens 5% grösser ist als als der Krümmungsradius (r_{Z}) der oberen Fläche (9).

4. Anordnung nach Anspruch 1, dadurch gekennzeichnet, dass der untere prismatische Körper (2) an seiner dem oberen prismatischen Körper (1) zugewandten Fläche (9) im mittleren Abschnitt eine sich in Nutlängsrichtung erstreckende leistenartige Erhebung (12) aufweist, die vorzusgweise einstückig mit dem unteren prismatischen Körper (2) ausgebildet ist.

5. Anordnung nach Anspruch 1, dadurch gekennzeichnet, dass der obere prismatische Körper (1) an seiner dem unteren prismatischen Körper (2) zugewandten Fläche (8') im mittleren Abschnitt eine sich in Nutlängsrichtung erstreckende leistenartige Erhebung (12) aufweist, die vorzusgweise einstückig mit dem oberen prismatischen Körper (1) ausgebildet ist.

6. Anordnung nach Anspruch 4 oder 5, dadurch gekennzeichnet, dass die leistenartige Erhebung (12) maximal ein Drittel der Nutbreite beträgt.

7. Anordnung nach Anspruch 1, dadurch gekennzeichnet, dass zwischen dem Leiterstab (4) und dem unteren prismatischen Körper ein Zwischenstück (13) vorgesehen ist, dessen dem unterem prismatischen Körper (2) zugewandte obere Fläche (9) konvex und dass die untere dem Zwischenstück (13) zugewandte Fläche des unteren Körpers (2) konkav gekrümmt ist, wobei der Krümmungsradius (r_{K}) der unteren Fläche des unteren prismatischen Körpers grösser ist als der Krümmungsradius (r_{Z}) der oberen Fläche des Zwischenstücks (13).

8. Anordnung nach Anspruch 7, dadurch gekennzeichnet, dass der Krümmungsradius (r_{K}) der unteren Fläche (17) des unteren prismatischen Körpers (2) um mindestens 5% grösser ist als der Krümmungsradius (r_{Z}) der oberen Fläche (16) des Zwischenstücks.

## Claims

1. Arrangement for sealing the slots (6), which are filled with conductor bars (4) or coils, in the laminated stator core (5) of an electrical machine by means of slot sealing elements, which each comprise at least one upper prismatic body (1), on whose underneath a surface runs in an inclined manner, and a lower prismatic body (2), whose upper surface, facing the upper body (1), runs inclined in the opposite direction to the gradient of the lower surface of the upper body, it being possible to produce the actual wedging by relative displacement of the two prismatic bodies (1, 2) with respect to one another, characterized in that the force is introduced from the conductor bar (4) or coil to the upper prismatic body (1), essentially only in its central section, over its entire length.

2. Arrangement according to Claim 1, characterized in that the said lower surface (8) in the upper prismatic body (1) is curved in a concave manner and in that the said upper surface (9) in the lower prismatic body (2) is curved in a convex manner, the radius of curvature (r_{K}) of the lower surface (8) being greater than the radius of curvature (r_{Z}) of the upper surface (9).

3. Arrangement according to Claim 2, characterized in that the radius of curvature (r_{K}) of the lower surface (8) is at least 5 % greater than than [sic] the radius of curvature (r_{Z}) of the upper surface (9).

4. Arrangement according to Claim 1, characterized in that, in the central section on its surface (9) facing the upper prismatic body (1), the lower prismatic body (2) has a strip-like projection (12), extending in the longitudinal direction of the slot, which is preferably constructed integrally with the lower prismatic body (2).

5. Arrangement according to Claim 1, characterized in that, in the central section on its surface (8') facing the lower prismatic body (2), the upper prismatic body (1) has a strip-like projection (12), extending in the longitudinal direction of the slot, which is preferably constructed integrally with the upper prismatic body (1).

6. Arrangement according to Claim 4 or 5, characterized in that the strip-like projection (12) is a maximum of a third of the slot width.

7. Arrangement according to Claim 1, characterized in that an intermediate element (13) is provided between the conductor bar (4) and the lower prismatic body, the upper surface (9) of which intermediate element, facing the lower prismatic body (2), is curved in a convex manner, and in that the lower surface, facing the intermediate element (13), of the lower body (2) is curved in a concave manner, the radius of curvature (r_{K}) of the lower surface of the lower prismatic body being greater than the radius of curvature (r_{Z}) of the upper surface of the intermediate element (13).

8. Arrangement according to Claim 7, characterized in that the radius of curvature (r_{K}) of the lower surface (17) of the lower prismatic body (2) is at least 5 % greater than the radius of curvature (r_{Z}) of the upper surface (16) of the intermediate element.

## Revendications

1. Dispositif destiné à fermer les encoches (6) remplies avec des barres conductrices (4) ou des bobines du corps en tôle (5) du stator d'une machine électrique à l'aide de pièces de fermeture d'encoche, lesquelles sont à chaque fois composées d'au moins un corps prismatique supérieur (1), sur la face inférieure duquel s'étend une surface inclinée, et d'un corps prismatique supérieur (2) dont la surface supérieure faisant face au corps supérieur (1) s'étend en étant inclinée dans le sens inverse par rapport à l'inclinaison de la surface inférieure du corps supérieur, le calage proprement dit étant réalisable par un décalage relatif des deux corps prismatiques (1, 2) l'un par rapport à l'autre, caractérisé par le fait que l'application des forces de la barre conductrice (4) ou de la bobine sur le corps prismatique supérieur (1) s'effectue sur toute sa longueur et pour l'essentiel seulement dans sa section centrale.

2. Dispositif selon la revendication 1, caractérisé par le fait que ladite surface inférieure (8) dans le corps prismatique supérieur (1) est concave et que ladite surface supérieure (9) dans le corps prismatique inférieur (2) est convexe, le rayon de courbure (r_{K}) de la surface inférieure (8) étant supérieur au rayon de courbure (r_{Z}) de la surface supérieure (9).

3. Dispositif selon la revendication 2, caractérisé par le fait que le rayon de courbure (r_{K}) de la surface inférieure (8) est supérieur d'au moins 5 % au rayon de courbure (r_{Z}) de la surface supérieure (9).

4. Dispositif selon la revendication 1, caractérisé par le fait que le corps prismatique inférieur (2) présente une élévation (12) de type barre s'étendant dans le sens longitudinal de l'encoche dans la section centrale sur sa surface (9) faisant face au corps prismatique supérieur (1), celle-ci étant de préférence réalisée d'un seul tenant avec le corps prismatique inférieur (2).

5. Dispositif selon la revendication 1, caractérisé par le fait que le corps prismatique supérieur (1) présente une élévation (12) de type barre s'étendant dans le sens longitudinal de l'encoche dans la section centrale sur sa surface (8') faisant face au corps prismatique inférieur (2), celle-ci étant de préférence réalisée d'un seul tenant avec le corps prismatique supérieur (1).

6. Dispositif selon la revendication 4 ou 5, caractérisé par le fait que l'élévation (12) de type barre a au maximum un tiers de la largeur de l'encoche.

7. Dispositif selon la revendication 1, caractérisé par le fait qu'une pièce intercalaire (13) est prévue entre la barre conductrice (4) et le corps prismatique inférieur dont la surface (9) qui fait face au corps prismatique inférieur (2) est convexe et que la surface du corps inférieur (2) faisant face au dessous de la pièce intercalaire (13) est concave, le rayon de courbure (r_{K}) de la surface inférieure du corps prismatique inférieur étant supérieur au rayon de courbure (r_{Z}) de la surface supérieure de la pièce intercalaire (13).

8. Dispositif selon la revendication 7, caractérisé par le fait que le rayon de courbure (r_{K}) de la surface inférieure (17) du corps prismatique inférieur (2) est supérieur d'au moins 5 % au rayon de courbure (r_{Z}) de la surface supérieure (16) de la pièce intercalaire.
